# FASCICULE DE BREVET EUROPEEN

(11) **EP 2 858 763 B1**
(45) Date de publication et mention de la délivrance du brevet: **14.06.2017**
(21) Numéro de dépôt: 13720994.6
(22) Date de dépôt: 15.04.2013
(51) Int. Cl.: B07C 3/00

(54) **CHARIOT D'AIDE AU TRANSFERT DE PLIS POUR MACHINE DE TRI POSTAL ET INSTALLATION DE TRI POSTAL**
WAGEN ZUM TRANSFER VON STAPELN IN EINER POSTSORTIERMASCHINE SOWIE POSTSORTIEREINRICHTUNG
CART FOR FACILITATING TRANSFER OF PILES IN A POSTAL SORTING MACHINE AND POSTAL SORTING INSTALLATION

(30) Priorité: 08.06.2012 FR 1255362
(43) Date de publication de la demande: 15.04.2015
(73) Titulaire: Solystic, 92220 Bagneux (FR)
(72) Inventeur: MESTRALLET, Frédéric, 26800 Étoile-sur-Rhône (FR); JOURDAN, Pierre, 26000 Valence (FR); SCHOTT, Olivier, 91230 Montgeron (FR)
(74) Mandataire: Prugneau, Philippe
(86) Numéro de dépôt international: PCT/FR2013/050815
(87) Numéro de publication internationale: WO 2013/182765

(56) Documents cités:
- DE-C1- 19 901 444
- FR-A1- 2 680 121
- FR-A1- 2 940 149

## Description

### Domaine technique

L'invention concerne un chariot d'aide au transfert de plis, pour machine de tri postal comportant une rangée de sorties de tri au niveau de chacune desquelles les plis sont empilés sur chant sur un plan de travail, le chariot d'aide au transfert de plis comportant au moins un support délimitant le dessous d'une zone de remplissage apte à recevoir un bac à remplir de plis empilés. Au sens de l'invention, un pli désigne notamment, mais non exclusivement, un envoi postal tel que par exemple une lettre simple, un magazine, une enveloppe, un journal, ou encore un catalogue présenté ou non sous enveloppe.

L'invention concerne également une installation de tri postal comportant au moins une machine de tri pourvue d'une rangée de sorties de tri au niveau de chacune desquelles des plis sont empilés sur chant sur un plan de travail, et au moins un chariot d'aide au transfert de plis dans des bacs à remplir puis des bacs pleins.

### Technique antérieure

Des chariots navette sont couramment utilisés pour évacuer les plis empilés au niveau des sorties de tri, tel que décrit dans le document DE 19901444 C1. Ces chariots navette sont déplacés d'une machine de tri à une autre. On place ainsi un ou plusieurs bacs sur un chariot navette que l'on dispose en regard de la sortie de tri à vider. Ensuite, l'opérateur charge le bac en saisissant manuellement une pile de plis au niveau de la sortie de tri, en la soulevant pour franchir le bord du plan de travail et en particulier la rive de taquage délimitant le bord du plan de travail, en déplaçant cette pile au-dessus du bac avant de la déposer dedans. Une fois que le bac est plein, il est remplacé par un bac vide rempli à son tour. Ce bac vide est prélevé soit dans une zone de réserve prévue sous le plan de travail de la machine, soit dans le stock de bacs vides du chariot où dans un stock pouvant être éloigné et prévu à cet effet. Pour évacuer une autre sortie de tri, il convient de déplacer le chariot navette en regard de cette autre sortie de tri et de répéter les mêmes opérations de chargement du bac. Pendant ces opérations de stock pouvant être éloigné et prévu à cet effet. Pour évacuer une autre sortie de tri, il convient de déplacer le chariot navette en regard de cette autre sortie de tri et de répéter les mêmes opérations de chargement du bac. Pendant ces opérations de chargement, il existe des risques de déstabilisation de la pile et de chute de plis, en particulier pendant le soulèvement de la pile de plis et son déplacement au-dessus du bord de travail et de la rive de taquage. De plus, cette manipulation des plis est fatigante pour l'opérateur et source de troubles musculo-squelettiques. Par ailleurs, le sommet du bac à remplir est rarement à une hauteur optimale ce qui augmente l'inconfort de l'opérateur. Enfin, la gestion des bacs vides peut nécessiter une manutention laborieuse pour remplacer, sur le chariot navette, un bac plein par un bac vide, l'opérateur ayant parfois à répéter les allers-retours pour aller récupérer les bacs vides au fur et à mesure de l'évacuation des plis. Lorsque les bacs vides sont stockés sous le plan de travail de la machine de tri, l'opérateur doit se baisser ou extirper un à un les bacs vides. Ces opérations sont particulièrement fatigantes à réaliser. De plus, la quantité de bacs apte à être stockée dans la machine de tri est limitée à un bac par sortie de tri et peut s'avérer insuffisante. Il est alors nécessaire pour l'opérateur d'avoir à sa disposition quelques bacs vides supplémentaires. Lorsqu'au niveau des sorties de tri des plis sont séparés les uns des autres par des intercalaires ou des étiquettes, ceux-ci doivent pouvoir être prélevés sans être placés dans les bacs. A défaut d'emplacement dédié pour recevoir ces intercalaires, l'opérateur utilise un bac vide pour les collecter, monopolisant ainsi inutilement un bac, par exemple disposé sur le plan de travail ce qui l'encombre. L'utilisation actuelle des chariots navette n'est donc pas satisfaisante.

### Exposé de l'invention

Le but de l'invention est de remédier à ces inconvénients en proposant un chariot d'aide au transfert de plis destiné à être utilisé entre la machine de tri et un chariot navette pour charger les plis empilés dans les bacs avant que ceux-ci ne soient transportés au moyen des chariot navette, les chariots de transfert améliorant l'ergonomie lors des opération de chargement des bacs, limitant les risques de déstabilisation des piles et de chutes de plis, et permettant d'optimiser l'utilisation des bacs vides.

A cet effet, l'invention a pour objet un chariot d'aide au transfert de plis, pour machine de tri postal comportant une rangée de sorties de tri au niveau de chacune desquelles les plis sont empilés sur chant sur un plan de travail, le chariot d'aide au transfert de plis comportant un support délimitant le dessous d'une zone de remplissage apte à recevoir l'appui d'un bac à remplir de plis empilés, le chariot d'aide au transfert de plis comportant une plaque dorsale portant des moyens de guidage destinés à coopérer avec une glissière longitudinale prévue sur la machine de tri pour assurer le guidage longitudinal du chariot d'aide au transfert de plis le long du plan de travail, caractérisé en ce que la plaque dorsale est prolongée par une rampe de transfert inclinée par rapport à la plaque dorsale avec laquelle elle forme un angle aigu et destinée à chevaucher le bord du plan de travail pour affleurer par le dessus le plan de travail quelle que soit la position longitudinale du chariot de transfert..

Le terme plaque n'est pas limitatif et fait également référence à tout équivalent tel que par exemple une ossature de tout type remplissant la même fonction de délimitation de zone.

L'idée à la base de l'invention consiste à prévoir un chariot d'aide au transfert de plis mobile longitudinalement le long du plan de travail et pourvu d'une rampe de transfert permettant le glissement de la pile de plis isolée par l'opérateur de la sortie de tri vers la zone de remplissage en franchissant le bord du plan de travail sans avoir à soulever la pile.

Le chariot d'aide au transfert de plis selon l'invention peut avantageusement présenter les particularités suivantes :
- le chariot d'aide au transfert de plis comporte une zone de stockage de bac dont le dessus est délimité par le support et le dessous est délimité par une plaque de fond solidaire de la plaque dorsale, la zone de stockage étant apte à recevoir au moins deux bacs sous la zone de remplissage ;
- le support est mobile entre une position déployée dans laquelle il définit bac dont le dessus est délimité par le support et le dessous est délimité par une plaque de fond solidaire de la plaque dorsale, la zone de stockage étant apte à recevoir au moins deux bacs sous la zone de remplissage ;
- le support est mobile entre une position déployée dans laquelle il définit le dessous de la zone de remplissage en formant un plan d'appui pour un bac, et une position escamotée dans laquelle il est en retrait par rapport à la zone de remplissage et autorise le passage d'un bac de la zone de stockage à la zone de remplissage sans sortir du chariot d'aide au transfert de plis ;
- le support est agencé pour passer de la position déployée à la position escamotée par contact avec un bac déplacé de la zone de stockage à la zone de remplissage ;
- le support est couplé à des moyens de rappel élastiques tendant à le maintenir dans la position déployée ;
- le support comporte deux longerons prévus de part et d'autre de la zone de remplissage ;
- le chariot d'aide au transfert de plis comporte des moyens de levage agencés pour déplacer automatiquement un bac de la zone de stockage à la zone de remplissage lorsque la zone de remplissage est vide de bac ;
- les moyens de levage comportent un doigt de levage prévu dans la zone de stockage et apte à porter au moins un bac, un rail de guidage agencé pour guider le doigt de levage entre la zone de stockage et la zone de remplissage, le doigt de levage étant relié à un système de contrepoids sollicitant le doigt de levage vers la zone de remplissage ;
- le chariot d'aide au transfert de plis comporte des parois latérales délimitant la zone de remplissage et la zone de stockage, et au moins un réceptacle amovible pourvu de moyens d'accrochage agencés pour autoriser son accrochage au choix sur l'une des parois latérales.

L'invention s'étend à une installation de tri postal comportant au moins une machine de tri pourvue d'une rangée de sorties de tri au niveau de chacune desquelles des plis sont empilés sur chant sur un plan de travail, et au moins un chariot d'aide au transfert de plis dans des bacs à remplir puis des bacs pleins, caractérisée en ce que le au moins un chariot d'aide au transfert de plis est un chariot d'aide au transfert de plis tel que décrit précédemment, en ce que la machine de tri comporte au moins une glissière longitudinale s'étendant sous le plan de travail et apte à coopérer avec les moyens de guidage pour assurer le guidage longitudinal du chariot d'aide au transfert de plis le long du plan de travail, en ce que la distance séparant les moyens de guidage de la rampe de transfert et la distance séparant la glissière longitudinale du plan de travail sont agencées pour que la rampe de transfert chevauche le bord du plan de travail et affleure par le dessus le plan de travail quelle que soit la position longitudinale du chariot de transfert.

### Présentation sommaire des dessins

La présente invention sera mieux comprise et d'autres avantages apparaîtront à la lecture de la description détaillée de modes de réalisation pris à titre d'exemples nullement limitatifs et illustrés par les dessins annexés, dans lesquels :
- les figures 1 et 2 sont des vues en perspective partielle d'une installation de tri postal comportant une machine de tri pourvue de sorties de tri, et un chariot d'aide au transfert de plis selon l'invention disposé en regard de l'une des sorties de tri, le chariot d'aide au transfert de plis ne comportant pas de bac dans la zone de remplissage et comportant des bacs vides dans la zone de stockage du chariot ;
- les figures 3 à 7 sont des vues en perspective partielle de l'installation de tri postal des figures 1 et 2 illustrant les étapes de prélèvement d'un bac vide dans la zone de stockage, sa mise en place dans la zone de remplissage, le transfert de la pile de plis empilés sur chant depuis la sortie de tri en regard du bac dans ce bac ;
- les figures 8 à 10 sont des vues en perspectives partielle de l'installation de tri postal des figures 1 et 2 illustrant les étapes de prélèvement d'un bac vide à dans la zone de réserve de la machine de tri et sa mise en place dans la zone de remplissage ;
- la figure 11 est une coupe partielle d'un chariot d'aide au transfert de plis selon l'invention détaillant un support escamotable et illustrant un bac placé dans la zone de stockage et un bac placé dans la zone d'empilage ;
- la figure 12 est une vue en perspective partielle de l'installation de tri postal correspondant à la figure 6, illustrant une étape de remplissage par une pile de plis empilés sur chant dans une sortie de tri adjacente à la sortie de tri en regard du chariot de transfert.

### Description des modes de réalisation

L'installation de tri postal selon l'invention comporte une ou plusieurs machines de tri, chacune pourvue d'au moins un chariot d'aide au transfert de plis destiné à faciliter le remplissage de bac avec des piles de plis prélevés au niveau des sorties de tri de la machine de tri, avant le transport de ces bacs remplis, au moyen de chariot navette, vers une autre destination.

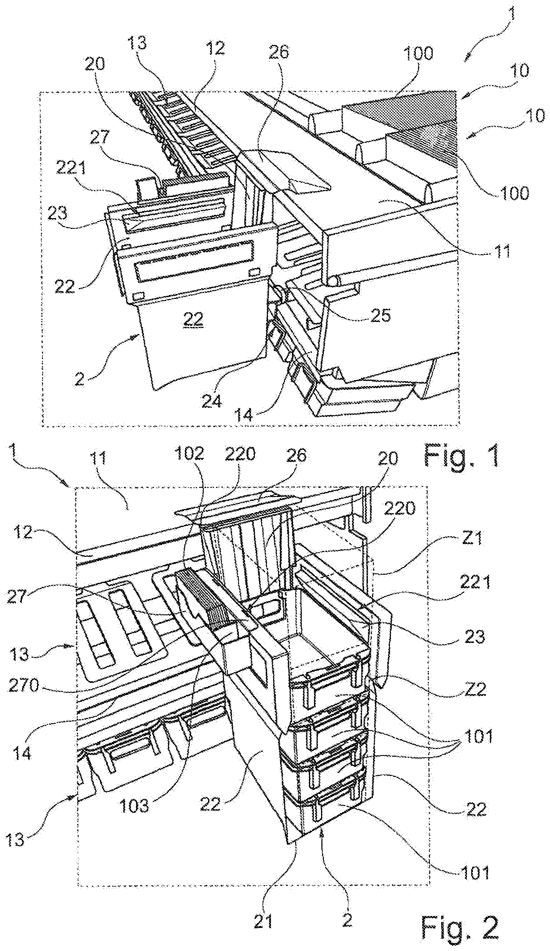

En référence aux figures 1 à 10 et 12, la machine de tri postal 1 est de type connu. Elle comporte une rangée de sorties de tri 10 au niveau desquelles, à l'issue du processus de tri, les plis 100 sont empilés sur chant, sur un plan de travail 11. Le plan de travail 11 peut être pourvu d'une rive de taquage 12 bloquant le cas échéant le front aval des plis 100, évitant ainsi que les plis 100 ne puissent tomber vers l'avant du plan de travail 11. Sous le plan de travail 11, la machine de tri 1 comporte au moins une zone de réserve 13 apte à recevoir des bacs vides 101 prêts à l'emploi. Dans l'exemple illustré, la machine de tri 1 comporte deux zones de réserve superposées. La machine de tri 1 comporte de plus une ou plusieurs glissières longitudinales 14 s'étendant sous le plan de travail 11 et parallèles au bord du plan de travail 11 pourvu de la rive de taquage 12. Dans l'exemple illustré en particulier par la figure 1, seule une glissière longitudinale 14 est visible. La machine de tri 1 peut également comporter un longeron (non représenté) couplé à l'une ou l'autre des glissières longitudinales 14 et présentant des renfoncements (non représentés) disposés régulièrement par rapport aux sorties de tri 10. Les fonctions de la glissière longitudinale 14, du longeron et de ses renfoncements sont expliquées plus loin.

En référence en particulier aux figures 1 et 2, le chariot d'aide au transfert de plis 2 comporte une plaque dorsale 20, une plaque de fond 21 et deux plaques latérales 22 solidaires de la plaque dorsale 20. Dans l'exemple illustré, les plaques latérales 22 ne s'étendent pas jusqu'au sommet de la plaque dorsale 20.

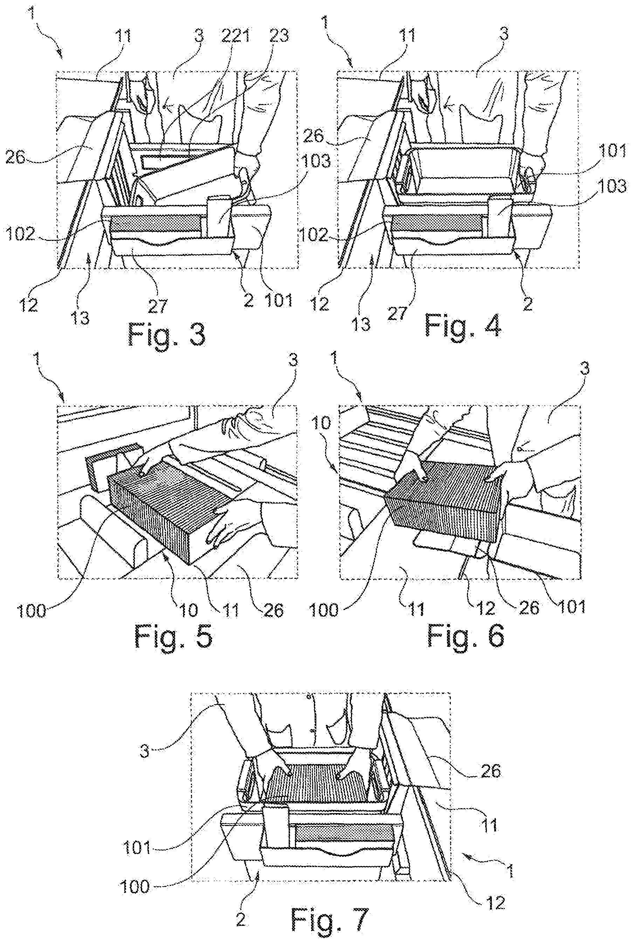

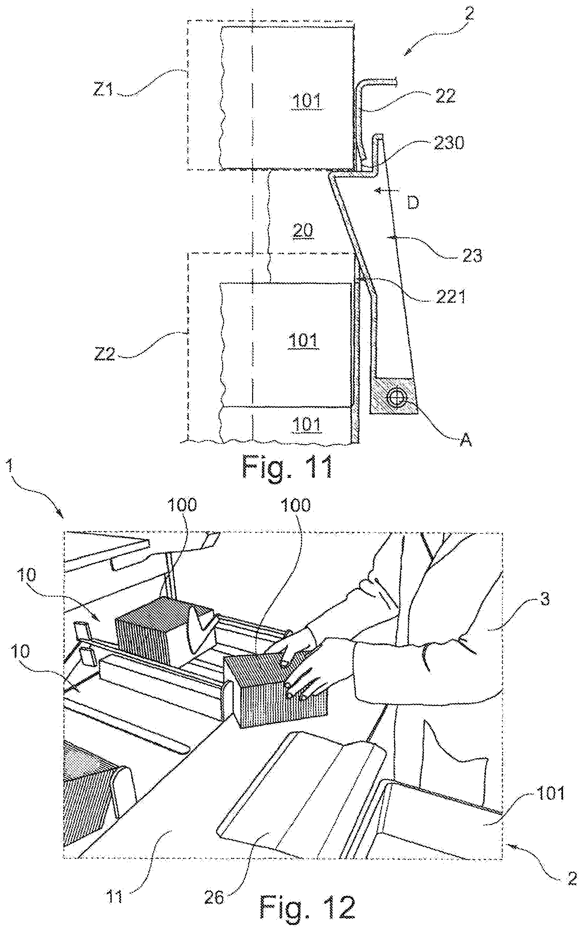

Le chariot d'aide au transfert de plis 2 comporte un support 23 formé dans cet exemple de deux longerons 23 disposés, en regard l'un de l'autre, portés par les plaques latérales 22, et définissant un plan d'appui destiné à recevoir l'appui d'un bac 101 à remplir. Les longerons 23 comportent au moins une portion transversale 230 (visible sur la figure 11) s'étendant sensiblement perpendiculairement à la plaque dorsale 20 et sensiblement parallèlement à la plaque de fond 21. Le plan d'appui est ainsi défini par ses portions transversales 230. Entre les longerons 23 et la plaque de fond 21, les plaques latérales 22 et la plaque dorsale 20 délimitent une zone de stockage Z2 (schématisée par des pointillés sur les figures 2 et 11) dans laquelle des bacs 101 vides peuvent être stockés, empilés les uns sur les autres. Au-dessus des longerons 23, les plaques latérales 22 et la plaque dorsale 20 délimitent une zone de remplissage Z1 (schématisée par des pointillés sur les figures 2 et 11) dans laquelle un bac 101 à remplir peut être disposé, en appui sur les longerons 23. Les longerons 23 sont chacun mobile entre une position déployée et une position escamotée. Dans leur position déployée, illustrée par les figures 1, 2 8, 10 et 11, les longerons 23 sont proéminents entre les plaques latérales 22 pour définir le plan d'appui du bac 101 et délimiter ainsi la zone de remplissage Z1. Dans leur position escamotée, illustrée par la figure 3, les longerons 23 sont en retrait par rapport aux plaques latérales 22 et autorisent le passage du bac 101 de la zone de stockage Z2 à la zone de remplissage Z1. Dans l'exemple illustré en particulier par la figure 11, chaque longeron 23 est en partie logé dans la plaque latérale 22 de laquelle il dépasse par une fente 221 dans la position déployée. Chaque longeron 23 est de plus articulé par rapport à un axe de pivotement A porté par la plaque latérale 22 correspondante et sensiblement parallèle à la plaque de fond 21. Les longerons 23 sont formés par une tôle pliée présentant un nez inversé comportant une portion inclinée et la portion transversale 230 formant le plan d'appui. Les longerons 23 peuvent bien entendu être articulés selon tout autre mécanisme équivalent. Chaque longeron 23 est par ailleurs couplé à des moyens de rappel élastique (non représentés) prévus entre le longeron 23 et la plaque latérale 22, exerçant ainsi un effort de rappel selon la flèche D tendant à maintenir les longerons 23 dans leur position déployée. Ces moyens de rappel élastiques comportent par exemple un ressort hélicoïdal, une lame ressort ou tout autre moyen équivalent.

Selon un mode de réalisation non représenté, les longerons peuvent être remplacés par une palette unique, par exemple montée pivotante sur la plaque dorsale.

Le chariot d'aide au transfert de plis 2 comporte en outre des moyens de guidage 24 (visibles sur la figure 1). Les moyens de guidage 24 comportent par exemple des profilés en U portés par la plaque dorsale 20 de l'autre coté de la même plaque dorsale 20 par rapport aux zones de remplissage Z1 et de stockage Z2. Ces moyens de guidage 24 sont engagés avec la glissière longitudinale 14 de la machine de tri 1 et coopèrent ainsi avec la glissière longitudinale 14 pour assurer le guidage longitudinal du chariot d'aide au transfert de plis 2 le long du plan de travail 11. Les moyens de guidage 24 peuvent comporter une ou plusieurs roulettes de guidage 25 (dont l'une est visible sur la figure 1), portées par le chariot d'aide au transfert de plis 2 et facilitant le déplacement des moyens de guidage 24 par rapport à la glissière longitudinale 14. Les moyens de guidage 24 peuvent par ailleurs être couplés à une roue d'indexage (non représentée) portée par le chariot d'aide au transfert de plis 2 et sollicitée par un ressort (non représenté) vers la machine de tri 1. Cette roue d'indexage est prévue en regard du longeron de sorte que, lorsque la roue d'indexage est en regard d'un renfoncement, la zone de remplissage Z1 est située en regard d'une sortie de tri 10. La roue d'indexage et les renfoncements permettent ainsi, successivement, de positionner précisément le chariot d'aide au transfert de plis 2 devant chaque sortie de tri 10.

Le chariot d'aide au transfert de plis 2 comporte enfin une rampe de transfert 26 inclinée par rapport au sommet de la plaque dorsale 20. La rampe de transfert 26 est orientée à l'opposé des zones de remplissage Z1 et de stockage Z2 par rapport à la plaque dorsale 20. De plus, la rampe de transfert 26 est inclinée vers les moyens de guidage 24. La distance séparant les moyens de guidage 24 de la rampe de transfert 26, et la distance séparant la glissière longitudinale 14 du plan de travail 11, sont prévues pour que, lorsque les moyens de guidage 24 sont engagés avec la glissière longitudinale 14, la rampe de transfert 26 chevauche le bord du plan de travail 11 et en particulier la rive de taquage 12 et affleure, par le dessus, le plan de travail 11.

Le chariot d'aide au transfert de plis 2 comporte en outre un réceptacle amovible 27 destiné à recevoir, par exemple, des intercalaires 102 et/ou étiquettes 103 utilisés pour séparer des piles de plis 100, et devant être prélevés au niveau des sorties de tri 10. Ce réceptacle amovible 27 comporte des moyens d'accrochage, tels que par exemple des crochets 270 (visibles sur la figure 2) lui permettant d'être suspendu sur l'arête supérieure d'une paroi latérale 22, de l'autre coté de la paroi latérale 22 par rapport à la zone de remplissage Z1. Pour une meilleure stabilité du réceptacle amovible 27, l'arête supérieure de la plaque latérale 22 peut comporter des fentes de blocage 220 (visibles sur la figure 2) destinées à recevoir les crochets 270.

Les dimensions du chariot d'aide au transfert de plis 2 sont adaptées aux dimensions des bacs 101 utilisés ainsi qu'à celles de la machine de tri 1. En particulier la hauteur de la zone de remplissage Z1, entre le sommet de la plaque dorsale 20 duquel la rampe de transfert 26 s'étend, et les longerons 23, correspond sensiblement à la hauteur d'un bac 101. De même, la hauteur de la zone de stockage Z2, entre la plaque de fond 21 et les longerons 23, est légèrement supérieure à la hauteur de plusieurs bacs 101 empilés dont le nombre est adapté en conséquence. La hauteur combinée de la zone de remplissage Z1 et de la zone de stockage Z2 est bien entendue adaptée en fonction de la hauteur du plan de travail 11 par rapport au sol de sorte que la plaque de fond 21 soit située au-dessus du sol, sans frottement pour ne pas gêner le déplacement longitudinal du chariot d'aide au transfert de plis 2 le long de la glissière longitudinale 14.

Lorsque la machine de tri 1 est en cours de tri, le chariot d'aide au transfert de plis 2 peut être coulissé jusqu'à l'une des extrémités du plan de travail 11 où il est stocké. Dès que l'opérateur 3 doit vider une sortie de tri 10, il déplace le chariot d'aide au transfert de plis 2, par coulissement le long de la glissière longitudinale 14, jusqu'à ce qu'il soit en regard de la sortie de tri 10 concernée. L'engagement de la roue d'indexage dans le renfoncement correspondant aide l'opérateur 3 à bien positionner le chariot d'aide au transfert de plis 2 par rapport aux sorties de tri 10. La rampe de transfert 26 étant au-dessus du plan de travail 11, elle n'entrave pas le déplacement longitudinal du chariot d'aide au transfert de plis 2. Le chariot d'aide au transfert de plis 2 est alors prêt à l'usage, en regard d'une sortie de tri, 10 tel qu'illustré par les figures1 et 2.

En référence à la figure 3, l'opérateur 3 saisit dans la zone de stockage Z2 un bac 101 vide et l'élève vers la zone de remplissage Z1 en passant entre les longerons 23. Pendant ce déplacement vertical, le bac de stockage 101 repousse les longerons 23 de leur position déployée vers leur position escamotée. Les longerons 23 s'escamotent ainsi dans les plaques latérales 22 pour autoriser le passage du bac 101 de la zone de stockage Z2 à la zone de remplissage Z1.

En référence à la figure 4, une fois le bac 101 au-dessus des longerons 23, les moyens de rappel élastique ramènent les longerons 23 dans leur position déployée dans laquelle ils servent d'appui au bac 101 vide qui est posé dessus et alors disponible pour recevoir des piles de plis 100.

Pour réaliser les opérations précédentes, l'opérateur 3 effectue des gestes simples sans avoir à se baisser.

En référence à la figure 5, l'opérateur 3 saisit ensuite une pile de plis 100 préalablement empilés par la machine de tri 1 au niveau de la sortie de tri 10 à vider. Si un intercalaire 102 ou une étiquette 103 présente au niveau de la sortie de tri doit être prélevé, l'opérateur 3 le place dans le réceptacle amovible 27.

En référence à la figure 6, l'opérateur 3 fait glisser la pile de plis 100 sur le plan de travail 11 vers le bord du plan de travail 11, puis sur la rampe de transfert 26 qui permet ainsi le franchissement aisé du bord du plan de travail 11 et en particulier de la rive de taquage 12.

En référence à la figure 7, l'opérateur 3 dépose ensuite la pile de pli 100 dans le bac 101.

En référence à la figure 12, une fois la sortie de tri 10 directement en regard du chariot d'aide au transfert de plis 2 vidé, l'opérateur 3 peut également, sans déplacement du chariot d'aide au transfert de plis 2, vider la sortie de tri 10 adjacente à la précédente.

Le chargement de la pile de plis 100 dans le bac 101, tel que précédemment décrit, est ainsi réalisé avec des gestes simples et en limitant les risques de déstabilisation de la pile de plis 100, en particulier lors du franchissement bord du plan de travail 11 et de la rive de taquage 12.

Une fois que le bac 101 présent dans la zone de remplissage Z1 est plein, il peut être chargé sur un chariot navette (non représenté) circulant d'une machine de tri 1 à une autre ou vers une autre destination. Un nouveau bac 101 vide peut être prélevé dans la zone de stockage Z2 pour être placé dans la zone de remplissage Z1 sans nécessiter que l'opérateur n'aille récupérer un bac 101 vide en extrémité de la machine de tri 1 ou à tout autre endroit. La gestion des bacs 101 vides et les déplacements de l'opérateur 3 sont ainsi optimisés.

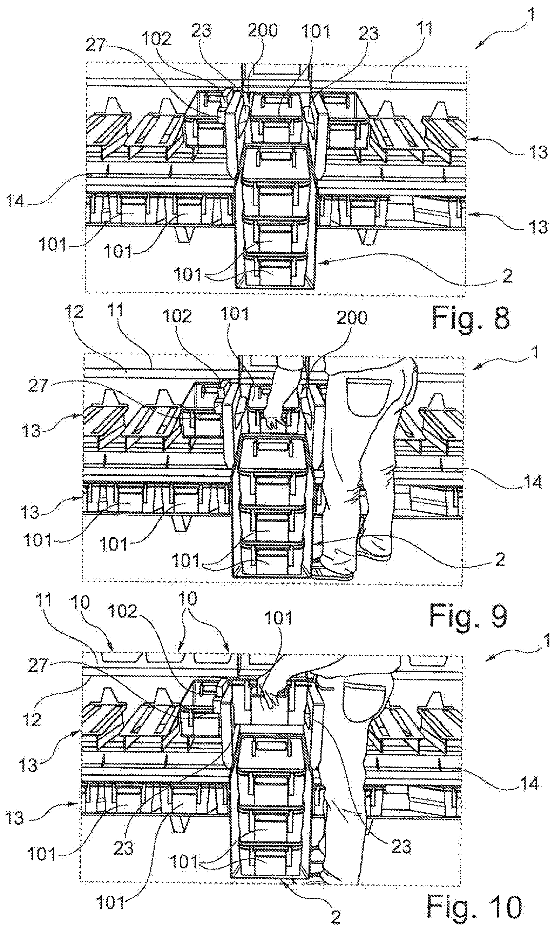

Selon le mode de réalisation illustré par les figures 8 à 10, la plaque dorsale 20 comporte une ouverture 200 de dimensions supérieures à celles des bacs 101 utilisés. Cette ouverture 200 peut être prévue en regard de la zone de remplissage Z1, ou de la zone de stockage Z2, ou simultanément en regard des deux zones de remplissage Z1 et de stockage Z2. Dans l'exemple illustré, en référence en particulier à la figure 8, l'ouverture 200 est prévue en regard de la zone de stockage Z2. L'ouverture 200 autorise l'accès à l'arrière du chariot d'aide au transfert de plis 2 et le passage d'un bac 101 stocké dans la zone de réserve 13 de la machine de tri 1 vers la zone de remplissage Z1 et si besoin vers la zone de stockage Z2. Sur la figure 9, on peut observer l'opérateur 3 qui saisit, au travers de l'ouverture 200, un bac 101 dans la zone de réserve 13, sans avoir à se baisser ni à étendre le bras de manière excessive. L'ouverture 200 permet ainsi de garantir l'ergonomie du poste de travail, même pendant l'opération de récupération de bacs 101 vide dans la zone de réserve 13. En référence à la figure 10, le bac 101 peut être déplacé de la zone de réserve 13 vers la zone remplissage Z1 par simple déplacement vertical tel que précédemment décrit.

Selon un mode de réalisation non représenté, le chariot d'aide au transfert de plis comporte des moyens de levage des bacs vides déplaçant automatiquement au moins un bac vide de la zone de stockage vers la zone de remplissage lorsque la zone de remplissage est vide de bac à remplir. A cet effet, le chariot d'aide au transfert de plis peut comporter des doigts de levage sur lesquels les bacs présents dans la zone de stockage reposent. Ces doigts de levage sont prévus au-dessus de la plaque de fond ou escamotés dedans au travers de fentes de passage prévues à cet effet. Ces doigts de levage sont par exemple guidés par des rails de guidage prévus dans la plaque dorsale ou dans l'une ou les deux plaques latérales. Les doigts de levage sont par ailleurs couplés à un mécanisme de levage, par exemple un lien relié à un contrepoids suspendu de l'autre coté respectivement de la plaque dorsale ou de la plaque latérale. Le contrepoids tend ainsi à lever les bacs vides dans la zone de stockage vers la zone de remplissage. Ainsi, dès que le bac présent dans la zone de remplissage est évacué, le ou les bacs présents dans la zone de stockage sont élevés jusqu'à ce qu'un bac occupe de nouveau la zone de remplissage dans laquelle il est prêt à être rempli.

L'invention permet d'atteindre les objectifs précédemment mentionnés. En effet, le chariot d'aide au transfert de plis 2 selon l'invention permet notamment d'améliorer considérablement l'ergonomie des opérations nécessaire pour disposer un bac 101 en regard de chaque sortie de tri 10 à vider, et de fiabiliser les opérations de chargement des plis 100 dans les bacs 101 en limitant les risques de déstabilisation des piles de plis 100 Enfin, l'invention permet d'optimiser l'utilisation des bacs 101 vides. Il va de soi que la présente invention ne saurait être limitée à la description qui précède des modes de réalisation, susceptibles de subir quelques modifications sans pour autant sortir du cadre de l'invention.

## Revendications

1. Chariot (2) d'aide au transfert de plis (100), pour machine de tri (1) postal comportant une rangée de sorties de tri (10) au niveau de chacune desquelles les plis (100) sont empilés sur chant sur un plan de travail (11), ledit chariot d'aide au transfert de plis (2) comportant un support (23) délimitant le dessous d'une zone de remplissage (Z1) apte à recevoir un bac (101) à remplir de plis (100) empilés, ledit chariot d'aide au transfert de plis (2) comportant une plaque dorsale (20) portant des moyens de guidage (24) destinés à coopérer avec une glissière longitudinale (14) prévue sur ladite machine de tri (1) pour assurer le guidage longitudinal dudit chariot d'aide au transfert de plis (2) le long dudit plan de travail (11), **caractérisé en ce que** ladite plaque dorsale (20) est prolongée par une rampe de transfert (26) inclinée par rapport à ladite plaque dorsale (20) avec laquelle elle forme un angle aigu et destinée à chevaucher le bord dudit plan de travail (11) pour affleurer par le dessus ledit plan de travail (11) quelle que soit la position longitudinale dudit chariot d'aide au transfert de plis (2).

2. Chariot d'aide au transfert de plis (2) selon la revendication 1, **caractérisé en ce qu'**il comporte une zone de stockage (Z2) de bac (101) dont le dessus est délimité par ledit support (23) et le dessous est délimité par une plaque de fond (21) solidaire de ladite plaque dorsale (20), ladite zone de stockage (Z2) étant apte à recevoir au moins deux bacs (101) sous ladite zone de remplissage (Z1).

3. Chariot d'aide au transfert de plis (2) selon la revendication 2, **caractérisé en ce que** ledit support (23) est mobile entre une position déployée dans laquelle il définit le dessous de ladite zone de remplissage (Z1) en formant un plan d'appui pour un bac (101), et une position escamotée dans laquelle il est en retrait par rapport à ladite zone de remplissage (Z1) et autorise le passage d'un bac (101) de ladite zone de stockage (Z2) à ladite zone de remplissage (Z1) sans sortir dudit chariot d'aide au transfert de plis (2).

4. Chariot d'aide au transfert de plis (2) selon la revendication 2, **caractérisé en ce que** ledit support (23) est agencé pour passer de ladite position déployée à ladite position escamotée par contact avec un bac (101) déplacé de la zone de stockage (Z2) à la zone de remplissage (Z1).

5. Chariot d'aide au transfert de plis (2) selon la revendication précédente, **caractérisé en ce que** ledit support (23) est couplé à des moyens de rappel élastiques tendant à le maintenir dans ladite position déployée.

6. Chariot d'aide au transfert de plis (2) selon la revendication 1, **caractérisé en ce que** ledit support (23) comporte deux longerons (23) prévus de part et d'autre de ladite zone de remplissage (Z1).

7. Chariot d'aide au transfert de plis selon la revendication 2, **caractérisé en ce qu'**il comporte des moyens de levage agencés pour déplacer automatiquement un bac de ladite zone de stockage à ladite zone de remplissage lorsque ladite zone de remplissage est vide de bac.

8. Chariot d'aide au transfert de plis selon la revendication précédente, **caractérisé en ce que** lesdits moyens de levage comportent un doigt de levage prévu dans la zone de stockage et apte à porter au moins un bac, un rail de guidage agencé pour guider ledit doigt de levage entre la zone de stockage et la zone de remplissage, ledit doigt de levage étant relié à un système de contrepoids sollicitant ledit doigt de levage vers ladite zone de remplissage.

9. Chariot d'aide au transfert de plis (2) selon la revendication 2, **caractérisé en ce qu'**il comporte des parois latérales (22) délimitant ladite zone de remplissage (Z1) et ladite zone de stockage (Z2), et au moins un réceptacle amovible (27) pourvu de moyens d'accrochage (270) agencés pour autoriser son accrochage au choix sur l'une desdites parois latérales (22).

10. Installation de tri postal comportant au moins une machine de tri (1) pourvue d'une rangée de sorties de tri (10) au niveau de chacune desquelles des plis (100) sont empilés sur chant sur un plan de travail (11), et au moins un chariot d'aide au transfert de plis (2) dans des bacs (101) à remplir puis des bacs (101) pleins, **caractérisée en ce que** ledit au moins un chariot d'aide au transfert de plis (2) est un chariot d'aide au transfert de plis (2) selon au moins l'une quelconque des revendications précédentes, **en ce que** ladite machine de tri (1) comporte au moins une glissière longitudinale (14) s'étendant sous ledit plan de travail (11) et apte à coopérer avec lesdits moyens de guidage (24) pour assurer le guidage longitudinal dudit chariot d'aide au transfert de plis (2) le long dudit plan de travail (11), **en ce que** la distance séparant lesdits moyens de guidage (24) de ladite rampe de transfert (26) et ladite distance séparant ladite glissière longitudinale (14) dudit plan de travail (11) sont agencées pour que ladite rampe de transfert (26) chevauche le bord dudit plan de travail (11) et affleure par le dessus ledit plan de travail (11) quelle que soit la position longitudinale dudit chariot d'aide au transfert de plis (2).

## Patentansprüche

1. Wagen zum Transfer von Stapeln (2) von Postkuverts (100) für eine Postsortiermaschine (1), umfassend eine Reihe von Sortierausgängen (10), in deren Bereich jeweils die Kuverts (100) auf Kante stehend auf einer Arbeitsfläche (11) gestapelt werden, wobei der Wagen zum Transfer von Stapeln (2) einen Träger (23) umfasst, der die Unterseite einer Befüllungszone (Z1) begrenzt, die geeignet ist, einen mit gestapelten Kuverts (100) zu füllenden Behälter (101) aufzunehmen, wobei der Wagen zum Transfer von Stapeln (2) eine rückseitige Platte (20) umfasst, die Führungsmittel (24) trägt, die dazu bestimmt sind, mit einer Längsschiene (14) zusammenzuwirken, die auf der Sortiermaschine (1) vorgesehen ist, um die Längsführung des Wagens zum Transfer von Stapeln (2) entlang der Arbeitsfläche (11) zu gewährleisten, **dadurch gekennzeichnet, dass** die rückseitige Platte (20) durch eine Transferrampe (26) verlängert ist, die in Bezug zu der rückseitigen Platte (20), mit der sie einen spitzen Winkel bildet, geneigt ist und dazu bestimmt ist, den Rand der Arbeitsfläche (11) zu überlappen, um von oben an die Arbeitsfläche (11) unabhängig von der Längsposition des Wagens zum Transfer von Stapeln (2) anzuschließen.

2. Wagen zum Transfer von Stapeln (2) nach Anspruch 1, **dadurch gekennzeichnet, dass** er eine Speicherzone (Z2) eines Behälters (101) umfasst, deren Oberseite von dem Träger (23) begrenzt ist, und deren Unterseite von einer Bodenplatte (21) begrenzt ist, die mit der rückseitigen Platte (20) verbunden ist, wobei die Speicherzone (Z2) geeignet ist, mindestens zwei Behälter (101) unter der Befüllungszone (Z1) aufzunehmen.

3. Wagen zum Transfer von Stapeln (2) nach Anspruch 2, **dadurch gekennzeichnet, dass** der Träger (23) zwischen einer ausgefahrenen Position, in der er die Unterseite der Befüllungszone (Z1) definiert, wobei er eine Stützfläche für einen Behälter (101) bildet, und einer eingezogenen Position, in der er in Bezug zur Befüllungszone (Z1) zurückgesetzt ist und den Durchgang eines Behälters (101) von der Speicherzone (Z2) zur Befüllungszone (Z1) gestattet, ohne aus dem Wagen zum Transfer von Stapeln (2) hervorzustehen, beweglich ist.

4. Wagen zum Transfer von Stapeln (2) nach Anspruch 2, **dadurch gekennzeichnet, dass** der Träger (23) dazu vorgesehen ist, von der ausgefahrenen Position in die eingezogene Position durch Kontakt mit einem Behälter (101), der von der Speicherzone (Z2) zur Befüllungszone (Z1) verschoben wird, überzugehen.

5. Wagen zum Transfer von Stapeln (2) nach dem vorhergehenden Anspruch, **dadurch gekennzeichnet, dass** der Träger (23) mit elastischen Rückstellmitteln gekoppelt ist, die dazu neigen, ihn in der ausgefahrenen Position zu halten.

6. Wagen zum Transfer von Stapeln (2) nach Anspruch 1, **dadurch gekennzeichnet, dass** der Träger (23) zwei Längsträger (23) umfasst, die beiderseits der Befüllungszone (Z1) vorgesehen sind.

7. Wagen zum Transfer von Stapeln nach Anspruch 2, **dadurch gekennzeichnet, dass** er Hubmittel umfasst, die dazu vorgesehen sind, automatisch einen Behälter von der Speicherzone zur Befüllungszone zu verschieben, wenn die Befüllungszone ohne Behälter ist.

8. Wagen zum Transfer von Stapeln nach dem vorhergehenden Anspruch, **dadurch gekennzeichnet, dass** die Hubmittel einen Hubfinger, der in der Speicherzone vorgesehen und geeignet ist, mindestens einen Behälter zu tragen, und eine Führungsschiene umfassen, die dazu vorgesehen ist, den Hubfinger zwischen der Speicherzone und der Befüllungszone zu führen, wobei der Hubfinger mit einem Gegengewichtssystem verbunden ist, das den Hubfinger in die Befüllungszone drückt.

9. Wagen zum Transfer von Stapeln (2) nach Anspruch 2, **dadurch gekennzeichnet, dass** er Seitenwände (22), die die Befüllungszone (Z1) und die Speicherzone (Z2) begrenzen, und mindestens ein abnehmbares Behältnis (27) umfasst, das mit Kopplungsmitteln (270) versehen ist, die dazu vorgesehen sind, seine Befestigung wahlweise an einer der Seitenwände (22) zu gestatten.

10. Postsortieranlage, umfassend mindestens eine Sortiermaschine (1), die mit einer Reihe von Sortierausgängen (10) versehen ist, in deren Bereich jeweils Kuverts (100) auf Kante stehend auf einer Arbeitsfläche (11) gestapelt werden, und mindestens einen Wagen zum Transfer von Stapeln (2) in zu befüllende Behälter (101), dann volle Behälter (101), **dadurch gekennzeichnet, dass** der mindestens eine Wagen zum Transfer von Stapeln (2) ein Wagen zum Transfer von Stapeln (2) nach mindestens einem der vorhergehenden Ansprüche ist, dass die Sortiermaschine (1) mindestens eine Längsgleitschiene (14) umfasst, die sich unter der Arbeitsfläche (11) erstreckt und geeignet ist, mit den Führungsmitteln (24) zusammenzuwirken, um die Längsführung des Wagens zum Transfer von Stapeln (2) entlang der Arbeitsfläche (11) zu gewährleisten, dass der Abstand zwischen den Führungsmitteln (24) und der Transferrampe (26) und der Abstand zwischen der Längsgleitschiene (14) und der Arbeitsfläche (11) derart vorgesehen ist, dass die Transferrampe (26) den Rand der Arbeitsfläche (11) überlappt und von oben an die Arbeitsfläche (11) anschließt, unabhängig von der Längsposition des Wagens zum Transfer von Stapeln (2).

## Claims

1. A cart (2) for assisting in transferring mailpieces (100) for a postal sorting machine (1) having a row of sorting outlets (10) at each of which the mailpieces (100) are stacked on edge on a work surface (11), said cart (2) for assisting in transferring mailpieces including a support (23) defining the bottom of a filling zone (Z1) suitable for receiving a tray (101) to be filled with stacked mailpieces (100), said cart (2) for assisting in transferring mailpieces being **characterized in that** it includes a back plate (20) carrying guide means (24) designed to co-operate with a longitudinal runner (14) provided on said sorting machine (1) for the purpose of guiding said cart (2) for assisting in transferring mailpieces along said work surface (11), **in that** said back plate (20) is extended by a transfer ramp (26) inclined relative to said back plate (20) with which it forms an acute angle and designed to bridge over the edge of the work surface (11) to come flush with said work surface (11) from above, regardless of the longitudinal position of said cart (2) for assisting in transferring mailpieces.

2. A cart (2) for assisting in transferring mailpieces according to claim 1, **characterized in that** it includes a storage zone (Z2) for storing trays (101), the top of which zone is defined by said support (23) and the bottom of which zone is defined by a bottom plate (21) secured to said back plate (20), said storage zone (Z2) being suitable for receiving at least two trays (101) under said filling zone (Z1).

3. A cart (2) for assisting in transferring mailpieces according to claim 2, **characterized in that** said support (23) is mounted to move between a deployed position in which it defines the bottom of said filling zone (Z1) by forming a bearing plane for a tray (101), and a retracted position in which it is set back relative to said filling zone (Z1) and allows a tray (101) to go past from said storage zone (Z2) to said filling zone (Z1) without leaving said cart (2) for assisting in transferring mailpieces.

4. A cart (2) for assisting in transferring mailpieces according to claim 2, **characterized in that** said support (23) is arranged to go from said deployed position to said retracted position by contact with a tray (101) being moved from the storage zone (Z2) to the filling zone (Z1).

5. A cart (2) for assisting in transferring mailpieces according to the preceding claim, **characterized in that** said support (23) is coupled to resilient return means urging it to stay in said deployed position.

6. A cart (2) for assisting in transferring mailpieces according to claim 1, **characterized in that** said support (23) includes two side rails (23) provided on either side of said filling zone (Z1).

7. A cart for assisting in transferring mailpieces according to claim 2, **characterized in that** it includes lifting means arranged to move a tray automatically from said storage zone to said filling zone when said filling zone is empty of any tray.

8. A cart for assisting in transferring mailpieces according to the preceding claim, **characterized in that** said lifting means include a lifting finger provided in the storage zone and suitable for carrying at least one tray, a guide rail being arranged to guide said lifting finger between the storage zone and the filling zone, said lifting finger being connected to a counterweight system urging said lifting finger towards said filling zone.

9. A cart (2) for assisting in transferring mailpieces according to claim 2, **characterized in that** it includes side walls (22) defining said filling zone (Z1) and said storage zone (Z2), and at least one removable receptacle (27) provided with attaching means (270) arranged to allow it to be attached to either of said side walls (22).

10. A postal sorting installation including at least one sorting machine (1) provided with a row of sorting outlets (10) at each of which mailpieces (100) are stacked on edge on a work surface (11), and at least one cart (2) for assisting in transferring mailpieces (2) into trays (101) to be filled, and then in transferring the full trays (101), said postal sorting installation being **characterized in that** said at least one cart (2) for assisting in transferring mailpieces is a cart (2) for assisting in transferring mailpieces according to any preceding claim, **in that** said sorting machine (1) is provided with at least one longitudinal runner (14) extending under said work surface (11) and suitable for co-operating with said guide means (24) for longitudinally guiding said cart (2) for assisting in transferring mailpieces along said work surface (11), and **in that** the distance between said guide means (24) and said transfer ramp (26), and said distance between said longitudinal runner (14) and said work surface (11) are arranged so that said transfer ramp (26) bridges over the edge of said work surface (11) to come flush with said work surface (11) from above regardless of the longitudinal position of said cart (2) for assisting in transferring mailpieces.
